# EUROPÄISCHE PATENTANMELDUNG

(11) **EP 1 870 679 A1**
(43) Veröffentlichungstag der Anmeldung: **26.12.2007**
(21) Anmeldenummer: 06012615.8
(22) Anmeldetag: 20.06.2006
(51) Int. Cl.: G01D 5/16, B60T 8/32, F16D 55/00, G01P 3/487

(54) **Brems- und/oder Blockiereinrichtung mit magnetischem Winkelcodierer**

(71) Anmelder: Hübner Elektromaschinen GmbH, 10967 Berlin (DE)
(72) Erfinder: Otto, Kai-Hans, 12526 Berlin (DE); Kubeile, Thomas, 14612 Falkesee (DE)
(74) Vertreter: Grünecker, Kinkeldey, Stockmair & Schwanhäusser Anwaltssozietät

(57) **Zusammenfassung**

Bei einer Brems- und/oder Blockiereinrichtung für eine umlaufende Welle wird die Brems- und/oder Blockierscheibe (3) der Einrichtung als Träger für eine magnetische Maßverkörperung genutzt, der ein berührungsloser, magnetoresistiver Sensor (5) zugeordnet ist.

## Beschreibung

Die Erfindung betrifft eine Brems- und/oder Blockiereinrichtung für eine umlaufende Welle, die mit einer Brems- und/oder Blockierscheibe versehen ist.

Brems- und/oder Blockiereinrichtungen werden in zahllosen Bereichen verwendet, um Aggregate unterschiedlicher Art abzubremsen oder stillzusetzen. Bei den entsprechenden Aggregaten besteht häufig ein Bedürfnis, die Drehzahl der Welle und/oder deren Position zu erfassen. Um diesem Bedürfnis Rechnung zu tragen, werden im allgemeinen Drehgeber unterschiedlicher Bauart verwendet.

Der Erfindung liegt die Aufgabe zugrunde, bei einer Brems- und/oder Blockiereinrichtung der in Betracht gezogenen Art die Brems- und/oder Blockierscheibe zu Messzwecken zu nutzen. Gelöst wird diese Aufgabe erfindungsgemäß dadurch, dass die Brems- und/oder Blockierscheibe als Träger für eine magnetische Maßverkörperung ausgebildet ist und dass ihr ein berührungsloser, magnetoresistiver Sensor zugeordnet ist.

Die Erfindung bietet gegenüber Lösungen, bei denen die Drehzahlen und/oder Positionen einer Welle mit üblichen opto-elektronischen Drehgebern ermittelt werden, den Vorteil, dass Beschädigungen der Messeinrichtung durch Vibrationen praktisch ausgeschlossen sind. Gegenüber ebenfalls bekannten magnetischen Hohlwellen-Drehgebern kann auf einen besonderen Tragring für die magnetische Maßverkörperung verzichtet werden.

Weitere Merkmale und Einzelheiten der Erfindung ergeben sich aus den Unteransprüchen, der beigefügten Zeichnung und der nachstehenden Beschreibung. Es zeigen:
- Fig. 1: die perspektivische Darstellung einer Brems- und Blockiereinrichtung,
- Fig. 2: eine Einzelheit der Fig. 1 in der Brems- bzw. Blockierposition,
- Fig. 3: eine Einzelheit der Fig. 1 in der Freigabeposition,

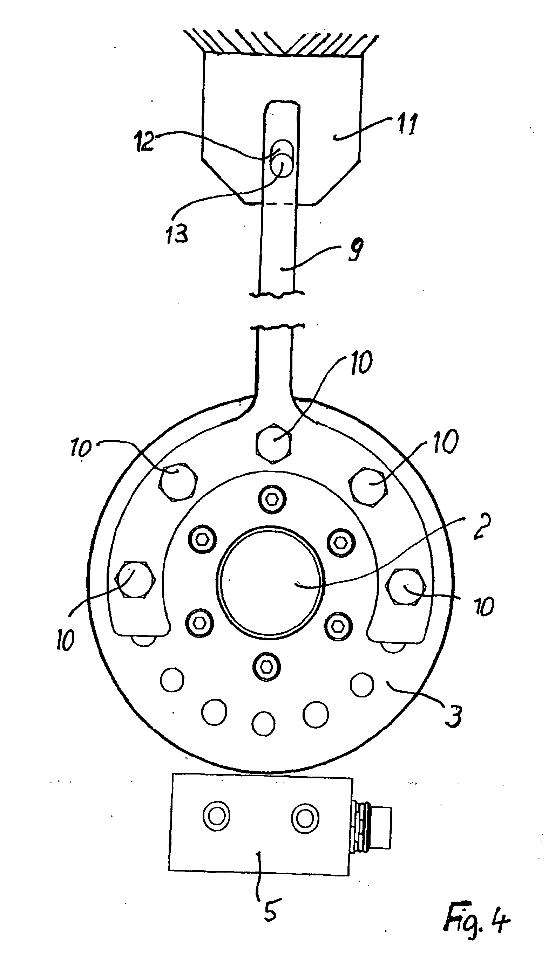

- Fig. 4: eine Modifikation der Vorrichtung gemäß Fig. 1, wie sie zum Kalibrieren einer elektrischen Maschine genutzt werden kann.

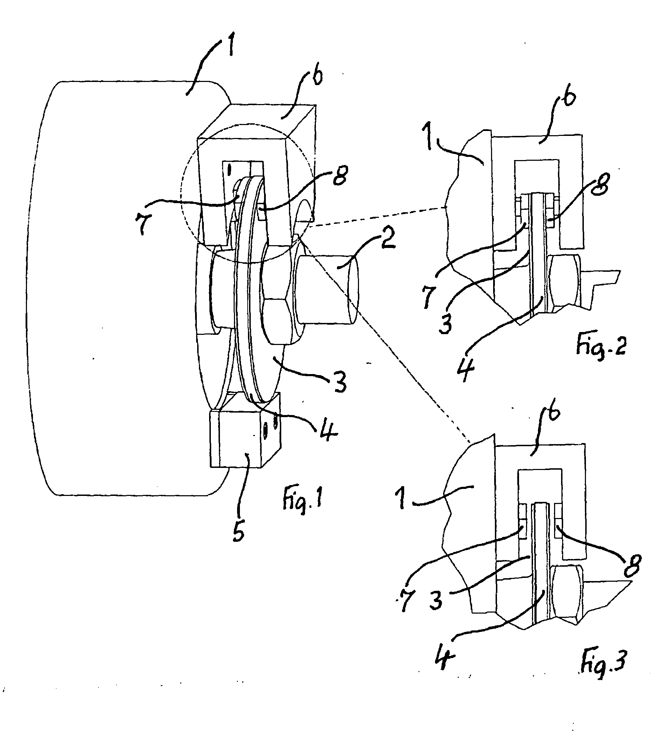

In Figur 1 ist 1 das Gehäuse eines von einem Elektromotor gebildeten Aggregates, dessen Welle 2 sowohl hinsichtlich ihrer Drehzahl als auch hinsichtlich ihrer Position überwacht werden soll. Mit der Welle 2 ist drehfest eine Scheibe 3 verbunden, die sowohl zum Abbremsen als auch zum Blockieren der Drehbewegung der Welle 2 dient, wobei zur Realisierung der Drehfestigkeit der Scheibe 3 auf der Welle 2 z. B. eine bekannte Nut- und Federverbindung oder eine Pressverbindung gewählt werden kann.

Die Scheibe 3 ist - wie in Fig. 1 dargestellt - im Bereich ihres Umfangs mit einem eine magnetische Maßverkörperung aufweisenden Magnetband 4 versehen, dem in an sich bekannter Weise ein magnetoresistiver Sensor 5 zugeordnet ist.

Zum Abbremsen bzw. zum Blockieren der Scheibe 3 dient ein Bremssattel 6, dessen Bremsklötze 7 und 8 beidseits der Scheibe 3 angeordnet sind. Figur 2 zeigt die Bremsklötze 7, 8 in ihrer Brems- bzw. Blockierposition, während Fig. 3 die Verhältnisse bei freigegebener Brems- und Blockierscheibe 3 wiedergibt.

Da der Sensor 5 von der Welle 2 bzw. der Scheibe 3 getrennt ist, werden durch die Bremsklötze 7, 8 in die Scheibe 3 eingeleitete Vibrationen praktisch weitgehend vom Sensor 5 ferngehalten, er ist also auf jeden Fall weniger gefährdet als die Sensorik eines mit der Welle 2 gekoppelten opto-elektronischen Drehgebers.

Die erfindungsgemäße Einrichtung eignet sich in besonderem Maße für den Einsatz in Verbindung mit Elektromotoren für sogenannte Kaltprüfstände zur Prüfung von Verbrennungsmotoren. In diesem speziellen Anwendungsfall ist der Elektromotor mit einer Blockierscheibe 3 versehen, die zum Kalibrieren des Motors mittels eines Koppelgliedes 9 blockierbar ist, das einerseits durch Schrauben 10 mit der Blockierscheibe 3 und andererseits mit einem Festlager 11 verbunden ist. Durch die Wahl eines geeigneten Querschnittes des Koppelgliedes 9 und durch die Verwendung eines Führungsschlitzes 12 für einen Führungszapfen 13 lässt sich das Koppelglied 9 während des Kalibrierungsvorganges in Abhängigkeit von der Stromstärke, mit der der Motor beaufschlagt wird, elastisch verformen. Mit der Verformung des Koppelgliedes 9 geht eine geringfügige Drehung der Blockierscheibe 3 einher, die durch den magnetoresistiven Sensor 5 erfassbar ist und zur Ermittlung des Drehmomentverlaufes des Elektromotors in Abhängigkeit von der zugeführten Stromstärke genutzt werden kann.

## Patentansprüche

1. Brems- und/oder Blockiereinrichtung für eine umlaufende Welle (2), die mit einer Brems- und/oder Blockierscheibe (3) versehen ist, **dadurch gekennzeichnet, dass** die Brems- und/oder Blockierscheibe (3) als Träger für eine magnetische Maßverkörperung ausgebildet ist und dass ihr ein berührungsloser, magnetoresistiver Sensor (5) zugeordnet ist.

2. Brems- und/oder Blockiereinrichtung nach Anspruch 1, **dadurch gekennzeichnet, dass** die Maßverkörperung im Bereich des Außenrandes der Brems- und/oder Blockierscheibe (3) angeordnet ist.

3. Brems- und/oder Blockiereinrichtung nach Anspruch 2, **dadurch gekennzeichnet, dass** die Maßverkörperung am Umfang der Brems- und/oder Blockierscheibe (3) angeordnet ist.

4. Brems- und/oder Blockiereinrichtung nach Anspruch 2, **dadurch gekennzeichnet, dass** die Maßverkörperung an der Stirnseite der Brems- und/oder Blockierscheibe angeordnet ist.

5. Blockiereinrichtung nach einem der Ansprüche 1 bis 4, **dadurch gekennzeichnet, dass** die Blockierscheibe (3) drehfest mit der Welle (2) eines Elektromotors verbunden ist, bei dem es sich um einen Bestandteil eines Kaltprüfstandes für Verbrennungsmotoren handelt und der zu Kalibrierungszwecken blockierbar ist, wobei zur Blockierung der Welle (2) ein elastisch verformbares Kopplungsglied (9) dient, das vom Grad seiner Deformation abhängige, minimale Veränderungen der Winkellage der Blockierscheibe (3) zulässt, die ihrerseits durch den magnetoresistiven Sensor (5) erfassbar sind.
